# EUROPEAN PATENT SPECIFICATION

(11) **EP 4 181 743 B1**
(45) Date of publication and mention of the grant of the patent: **18.02.2026**
(21) Application number: 21735689.8
(22) Date of filing: 24.06.2021
(51) Int. Cl.: A47J 31/60

(54) **BEVERAGE PREPARATION DEVICE**
GETRÄNKEZUBEREITUNGSVORRICHTUNG
DISPOSITIF DE PRÉPARATION DE BOISSON

(30) Priority: 15.07.2020 EP 20185868
(43) Date of publication of application: 24.05.2023
(73) Proprietor: Société des Produits Nestlé S.A., 1800 Vevey (CH)
(72) Inventor: PUGLIESE, Alexandre, 1094 Paudex (CH); PERENTES, Alexandre, 1036 Sullens (CH)
(74) Representative: Pasquino, Fabio
(86) International application number: PCT/EP2021/067302
(87) International publication number: WO 2022/012894

(56) References cited:
- DE-A1- 102015 008 811
- US-A1- 2011 049 187
- US-A1- 2016 023 880

## Description

### 1. Field of the invention

The present invention relates to a beverage preparation device and a method for preparing a beverage.

### 2. Technical background

A beverage preparation device may be used for on demand beverage dispensing. Such beverage preparation devices are convenient, since the user of the device can on demand request a beverage and subsequently directly consume the beverage.

As a main ingredient, water is used for the preparation of the beverage. In the beverage preparation device, the water comes into contact with several device parts, such as a pump and tubes, which are required for preparing or at least dispensing the beverage. Water may be a breeding ground for pathogens (also called "germs"), i.e. an infectious microorganism or agent, such as a virus, bacterium, or fungus. Also, other impurities such as a biofilm may be formed in the beverage preparation device. In general, germs may produce a disease. The beverage preparation device thus needs to be cleaned regularly in order to prevent or at least substantially reduce the germ and impurities formation.

Cleaning of the beverage preparation device is, however, time-consuming and cumbersome, since the respective parts of the device are difficult to be accessed and since cleaning needs to be carried out regularly. Hence, even if measures are taken for cleaning the beverage preparation, there is still the risk that germs and other impurities are formed in the device and that a consumer of the beverage preparation device consumes contaminated water.

Furthermore, there may be the risk that the beverage preparation machine uses water, which already includes germs and other impurities. This may happen, when the respective water network does not provide germ-free or sanitized water. The germs and impurities of the water may accumulate in the beverage preparation device, requiring a regular cleaning of the beverage preparation device in short intervals. Document DE102015008811A1 describes a drinks machine for preparing brewed drinks with at least one cleaning device for cleaning at least one area of the drinks machine. A cleaning fluid is provided, wherein the drinks machine is set up to feed a dirty fluid formed during a cleaning process by means of the cleaning device to the filter.

Therefore, it is an object of the present invention to provide a beverage preparation device and method for preparing a beverage, which overcome the afore-mentioned drawbacks. That is, it is in particular an object of the present invention to more efficiently ensure that a beverage preparation device is always free from germs and any other impurities.

These and other objects, which become apparent upon reading the following description, are solved by the subject matter of the independent claims. The dependent claims refer to preferred embodiments of the invention.

### 3. Summary of the invention

According to the invention, a beverage preparation device according to claim is provided. The beverage preparation device comprises: a discharge line for discharging water via a discharge outlet, a pump for selectively circulating water along the discharge line towards the discharge outlet, and one or more flushing lines with a flushing outlet. The beverage preparation device is configured to operate in a discharging mode and in a flushing mode, such that in the discharging mode the pump is arranged to circulate water along the discharge line towards and out of the discharge outlet, and in the flushing mode at least part of the water in the discharge line flows by gravity from the discharge line into the one or more flushing lines and subsequently out of the flushing outlet.

In the flushing mode, the flow of the at least part of the water in the discharge line, which flows by gravity into the one or more flushing lines, is therefore opposite to the flow of the water, which circulates along the discharge line in the discharging mode. The beverage preparation device thus facilitates that in the flushing mode a flow can be effected by gravity only, which is sufficient to transport impurities (germs, etc.) out of the respective line, in particular out of the discharge line. These impurities may accumulate in the respective line, such as on a wall. Cleaning of the beverage preparation device is therefore very efficient and simple, since no additional means such as a pump are required for flushing and thus cleaning the respective lines, in particular the discharge line. Flushing and, thus, cleaning of the respective line may therefore be effected by only switching from the discharging mode into the flushing mode, thereby not requiring a complex control.

In the flushing mode, the pump is arranged to draw at least part of the water from the discharge line into the one or more flushing lines and subsequently out of the flushing outlet. As such, the pump may be configured to selectively convey liquid in a first direction (i.e. towards the discharge outlet) or in a second direction (i.e. into the one or more flushing line), which is opposite to the first direction. The pump thus supports the flushing by gravity so that cleaning the respective line is even more efficient.

The pump is a gear pump or a bidirectional pump. Compared to the one or more flushing lines, at least part of the discharge line may be arranged on a higher level with respect to the vertical. In the flushing mode, water remaining in this part of the discharge line may thus fall by gravity from this higher level along the discharge line and into the one or more flushing lines. As such, a flow is effected, which effectively transports impurities such as germs from the discharge line into the one or more flushing lines.

The beverage preparation device is configured to automatically switch between the discharging mode and the flushing mode. Thus, no user interaction is required for switching between the discharging mode and the flushing mode. Flushing and, therefore, cleaning of the beverage preparation device thus becomes more convenient.

The beverage preparation device may be configured to switch between the discharging mode and the flushing mode based on a status of the beverage preparation device, such as the status of a water supply, e.g. a water tank, from which the pump draws water for the circulation along the discharge line. The dependence of switching between the discharging mode and the flushing mode on the status of the beverage preparation device effects that flushing, i.e. the switching into the flushing mode, is carried out at the right time, without requiring a complex control or complex measurements.

The status may be the presence of the water supply, the functional connection of the water supply with the discharge line (e.g. whether or not water can flow from the water supply into the discharge line), the residence time of water at a specific level in the water supply, the lapsed (consecutive) time in which no water is discharged via the discharge outlet, the temperature of the water within the water supply, and/or combinations thereof.

The beverage preparation device may comprise one or more valves so that based on controlling the valves the beverage preparation device switches between the discharging mode and the flushing mode. The one or more valves may be arranged to move (by controlling the one or more valves) between a first position, in which the one or more flushing lines are connected to the discharge line (i.e. the flushing mode), and a second position, in which the one or more flushing lines are disconnected from the discharge line (i.e. the discharging mode), thereby switching between the discharging mode and flushing mode.

The beverage preparation device may comprise a first flushing line and a second flushing line, wherein in the flushing mode the discharge line is separated into a first section, which comprises the discharge outlet, and a second section, the first section connecting to the first flushing line, and the second section connecting to the second flushing line, wherein, compared to the second flushing line, the first flushing line is preferably arranged at a higher level with respect to the vertical. By providing each of the two flushing lines at a respective part of the discharge line, i.e. at the first section and the second section, respectively, the discharge line can be very effectively flushed by gravity.

The beverage preparation device may further comprise a UV lamp arranged for irradiating UV light at a position along the discharge line to sanitize the water. Therefore, the water to be discharged via the discharge line and the discharge outlet is easily sanitized and, thus, purified, and the risk of the discharged water containing germs is eliminated or at least substantially reduced. As such, the beverage preparation device may be used with water irrespective of the water quality (e.g. also germ-containing water), since the beverage preparation device provides an integral sanitization of the water, which is subsequently, i.e. when sanitization has been finished by the UV light, dispensed via the discharge outlet.

The beverage preparation device may further comprise a heating unit arranged for heating and, thus, sanitizing the water, which is to be discharged via the discharge outlet, wherein the heating unit is preferably arranged at a secondary discharge line which selectively connects to (or disconnects from) the discharge line. The heater therefore provides an integral means of the beverage preparation device for sanitizing the water.

The beverage preparation device may further comprise a beverage additive section for dispensing additives, such as in the form of a liquid or in the form of a liquid comprising solid particles, via the discharge outlet. The additives may thus in combination with the water discharged via the discharge outlet form a final product, which has, dependent on the additives, a specific taste and/or function.

The beverage additive section may be arranged in a secondary discharge line (e.g. the before-mentioned secondary discharge line of the heater) connecting the discharge line with the discharge outlet.

The additives may comprise at least one of the group consisting of: flavours, aromas (for example orange, peach, lemon, etc.), minerals, a mineral liquid concentrate, a functional concentrate (such as an additive comprising a vitamin, caffeine or another coffee extract; "functional concentrate" is to be understood as having an effect on the consumer, such as a product that is probiotic, prophylactic, stimulatory, etc.), an edible flavouring concentrate, a tea and/or coffee extract, a fruit juice, a minerals mother solution or combinations thereof.

The beverage additive section is preferably adapted to dispense the additives to the water, which is to be dispensed through the discharge outlet, such that the additives designate an amount up to 5%, preferably 0.05% to 1%, preferably 0.1% to 0.5% by volume, of the resulting liquid material in the final product.

The beverage preparation device may further comprise an in-line carbonation device for entering CO2 (carbon dioxide) into the discharge line. Hence, the beverage preparation device may discharge a beverage with carbonated water (soda water, sparkling water, seltzer, or seltzer water, etc.) containing dissolved carbon dioxide gas. The beverage preparation device may further comprise a collecting container, such as a drip tray, wherein the collecting container is arranged to collect the water, which flows via the flushing outlet out of the one or more flushing lines. The collection of the residual water is, thus, conveniently carried out. The collecting container may be detachable so that the user may easily remove the collecting container from the beverage preparation device in order to dispose of the water, collected by the collecting container. The collecting container may be arranged to collect water, such as residual water, flowing out of the discharge outlet. In other words, the collecting container may be arranged opposite to the discharge outlet so that, when a container such as a cup is positioned below the discharge outlet for collecting the discharged beverage, the container is arranged between the discharge outlet and the collecting container.

According to a further aspect of the invention, a method for preparing a beverage according to claim 11 is provided. The method comprises the steps of: circulating water along a discharge line of a beverage preparation device and towards a discharge outlet of the discharge line, stopping the circulation of water along the discharge line, and connecting one or more flushing lines to the discharge line so that at least part of the water in the discharge line flows by gravity and /or through the reverse pumping function from the discharge line into the one or more flushing lines and subsequently out of a flushing outlet of the one or more flushing lines.

The above-mentioned advantages and description with respect to the beverage preparation device apply analogously to the method.

The method may further comprise the steps of: detecting a status of the beverage preparation device, such as the status of a water supply from which water is drawn for the circulation along the discharge line, and connecting, based on the status of the beverage preparation device, the one or more flushing lines to the discharge line.

### 4. Brief description of drawings

In the following, the invention is described exemplarily with reference to the enclosed figures, in which
Figure 1 shows a schematic view of a beverage preparation device according to a first preferred embodiment of the invention, wherein the beverage preparation device operates in the discharging mode with optional dispensing of additives;
Figure 2 shows a schematic view of a beverage preparation device according to a second preferred embodiment of the invention, wherein the beverage preparation device operates in the discharging mode;
Figure 3 shows the beverage preparation device according to figure 2, wherein the beverage preparation device operates in the flushing mode; and
Figure 4 shows the beverage preparation device according to figure 2, wherein the beverage preparation device operates in the discharging mode with optional sanitization.

### 5. Detailed description

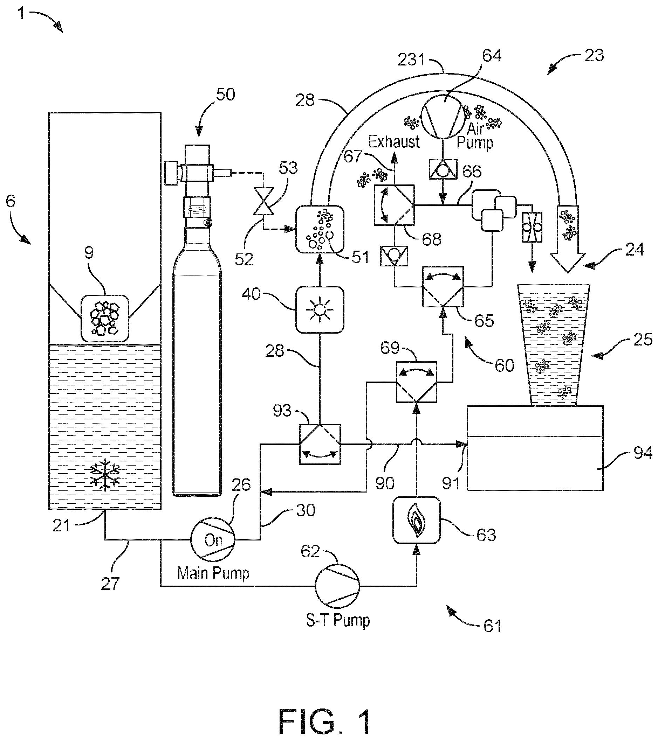

Figure 1 exemplarily shows a beverage preparation device 1 or water system according to a preferred embodiment of the invention. The beverage preparation device 1 may be adapted for being used by a consumer, who requests (on demand) a beverage from the beverage preparation device 1. That is, the beverage preparation device 1 may be adapted to discharge a beverage that is ready for drinking by the consumer, i.e. a ready-to-drink beverage. The beverage preparation device 1 is not limited to a specific design. Preferably, the beverage preparation device 1 is designed to be used on the side of a business (B2B) and/or on the side of a customer (B2C). For example, the beverage preparation device 1 may be designed as a vending machine (airport, mall, public area, etc.), in B2B (hotel, restaurant, café, i.e. "HoReCa", fitness center, office, etc.) and/or B2C (e.g., at home). The beverage preparation device 1 may be designed as a vending machine, a water dispenser, and/or a home appliance device. The beverage preparation device 1 may be designed for being mounted or positioned to a wall (wall-mounted), a bottom, and/or a tabletop, and/or the beverage preparation device 1 may have a freestanding design. The beverage preparation device 1 may comprise a connection for a power supply in order to supply the respective components of the beverage preparation device 1 with electrical energy.

The beverage preparation device comprises a discharge line 23 for discharging water via a discharge outlet 24. The discharge outlet 24 may be arranged such that water flowing through the discharge outlet 24 is discharged out of the beverage preparation device 1, such as in a container 25 (e.g. a cup) positioned downstream of the discharge outlet 24 with respect to a flow from the discharge line 23 to the discharge outlet 24. The discharge outlet 24 may be arranged such that the flow of water exiting the discharge outlet 24 can (e.g. directly) enter the container 25, which is, for example, positioned on a support of the beverage preparation device 1. For example, the discharge outlet 24 is positioned opposite and/or above said support. The discharge line 23 may comprise a water inlet 21. By way of the water inlet 21 water can be delivered into the discharge line 23. The discharge line 23 is not limited to a specific design or arrangement. Preferably, the discharge line 23 extends in a straight, angled and/or arcuate manner. As can be seen in the figures, the discharge line 23 may partially extend in an arcuate manner. The discharge line 23 may comprise a section 231. The section 231 may be arranged such that water, which is to be discharged via the discharge outlet 24, is required to have enough energy to flow beyond this section 231 and subsequently out of the discharge outlet 24. If the discharge line 23 is at least in part designed in an angled and/or arcuate manner, the section comprising the arch (or bend) may then comprise the section 231.

The discharge line 23 may be composed of a first section 28 and a second section 27, 30. The first section 28 may be the part of the discharge line 23, which comprises the discharge outlet 23. The first section 28 may thus comprise the arcuately extending part of the discharge line 23 and/or may comprise the section 231. The first section 28 may comprise also a part of the discharge line 23, which extends in a substantially straight and/or vertical manner. The second section may be composed of an inlet line 27 and a delivery line 30. The second section 27, 30, such as the inlet line 27, preferably comprises the water inlet 21 so that via the water inlet 21 water can enter the second section 27, 30 respectively inlet line 27. Thus, water can be delivered into the second section 27, 30 (for example into the inlet line 27 and subsequently into the delivery line 30) and subsequently into the first section 28 to be finally discharged from the discharge outlet 24.

The beverage preparation device 1 further comprises a pump 26 (i.e. a main pump) to circulate water selectively along the discharge line 23 and towards the discharge outlet 24 and finally out of the discharge outlet 24. The pump 26 may be arranged to pump the water such that the water (still or sparkling), which is discharged out of the discharge outlet 24, has a specific flow rate, which is, for example, in the range from 1 l/min to 3l/min, preferably 2 1/min. The pump 26 is preferably arranged at a position along the discharge line 23, for example next to the water inlet 21 of the discharge line 23 and/or at the delivery line 30. The pump 26 preferably provides a flow rate or energy to the water so that this water can flow beyond the section 231 and subsequently out of the discharge outlet 24. The pump 26 may be a pump, which can deliver liquid, in particular water, in two directions, which are opposite to one another, i.e. along the discharge line 23 and towards (first direction) and away from (second direction) the discharge outlet 24. The pump 26 is a gear pump or a bidirectional pump.

The beverage preparation device 1 may be adapted to be connectable to or may comprise a water supply 6. The water supply 6 may be functionally connectable or connected to the discharge line 23, e.g. via the water inlet 21 of the discharge line 23, to deliver water from the water supply 6 into the discharge line 23, such as by operating the pump 26. The water supply 6 may be a (external) water tank, which can store a defined amount of water, such as between 1 and 6 l, preferably 3 l. The water tank may be adapted to filter the water inside of the water tank. For example, the water tank comprises a water filter 9 for filtering the water inside of the water tank. Filtering of the water by the water filter 9 may be carried out by arranging the water filter 9 such that water, which is supplied into the water tank, passes through the water filter 9 (e.g., by gravity), thereby filtering the water; this water is then also called "prefiltered water". The water filter 9 may be arranged such that water passing through and, thus, filtered by the water filter 9 flows into a chamber of the water tank, which is dedicated for the so filtered ("pre-filtered") water. This chamber may be adapted to store a defined amount of pre-filtered water, such as 1.5 l. The remaining part of the water tank other than this chamber may define a further chamber, which has a defined volume, such as 1.5 or 3 l. The water filter 9 is not limited to a specific water filter as long as the water filter 9 can prevent particles (such as germs or other particles facilitating the formation of germs, i.e. impurities) from moving into the discharge line 23. The water filter 9 may comprise at least one of the group consisting of a particle filter, an ultrafiltration device, and nano-filtration device, an active carbon device, and a reverse osmosis device. The water filter 9 may be also arranged in the discharge line 23. As such, filtering of the water may be also carried out without having the water supply 6 designed as a water tank.

The water supply 6 may be detachably provided with respect to the beverage preparation device 1. For example, a user of the beverage preparation device 1 may detach the (e.g. empty) water supply 6 in order to subsequently attach a new (e.g., full) water supply 6 to or in the beverage preparation device 1. Additionally or alternatively, the water supply 6 may comprise a port, wherein via this port water can be filled into the water supply 6, and/or wherein this port (a water connection) is adapted to connect with a water network, such as with an outlet for mains water (tap water). Thus, by having the port, the water supply 6 is not required to be designed as a water tank, since via the port water can be directly delivered into the discharge line 23. The port may be the water inlet 21. The water supply 6 may also be integrally provided with the beverage preparation device 1. For example, the water supply 6 may comprise a part of the housing of the beverage preparation device 1 and/or may be permanently (e.g. by way of a material connection such as welding) connected to the beverage preparation device 1.

Drawing of the water from the water supply 6 for the circulation along the discharge line 23 is preferably carried out by the pump 26. The pump 26 is therefore configured to move (i.e. pump) water from the water supply 6 via the water inlet 21 into the discharge line 23 and finally out of the discharge outlet 24. Additionally, the water supply 6 may be arranged such that water is supplied or moved from the water supply 6 into the discharge line 23 by gravity, so that the gravity supports the pumping by the pump 26 from the water supply 6 into the discharge line 23 (alternative to gravity would be pumping backwards to accelerate the discharge). The pump 26 can thus be downsized, i.e. designed in a more simple manner. For example, a valve may be provided, which is configured to selectively allow or not allow a flow of water from the water supply 6 into the discharge line 23.

The water supply 6 may be adapted to cool the water within the water supply 6. The water supply 6 may comprise a cooling unit (not shown) to cool or chill the water within the water supply 6. The water may thus be cooled to comprise a temperature in the range from o°C to 5°C.

The beverage preparation device 1 may comprise a UV lamp 40 arranged for irradiating UV light at the position along the discharge line 23 to sanitize the water. Sanitizing water with UV light may be also called ultraviolet germicidal irradiation (UVGI). More specifically, the irradiating UV light (short-wavelength ultraviolet, UV-C) kills or inactivates the germs by destroying structures of the germs, such as nucleid acis, leaving the germs unable to produce a disease. In particular, the UV light kills or inactivates germs such as microorganisms by destroying biomolecules such as nucleid acids and disrupting their DNA, leaving them unable to perform vital cellular functions. Consequently, germs in the water can be eliminated or at least significantly reduced, thereby sanitizing and purifying the water. The wavelengths of the irradiated UV light may be short-wavelength UV (UVC; "germicidal UV") and/or may be in the range from about 200 nm to 300 nm. These wavelengths are strongly absorbed by the germs/nucleic acids, wherein the absorbed energy results in defects of the germs, including, for example, pyrimidine dimers. These dimers can prevent replication or can prevent the expression of necessary proteins, resulting in the death or inactivation of the organism of the germ. The UV lamp 40 may comprise a light source arranged for emitting (irradiating) the UV light. For example, the UV lamp 40 comprises a Mercury based lamp, ultraviolet light-emitting diodes, and/or a pulsed-xenon lamp.

In general, the UV lamp 40 may be arranged at any position suitable for sanitizing the water, which is to be discharged via the discharge outlet 24, by the irradiated UV light. For example, the UV lamp 40 may be arranged to irradiate UV light into the first section 28 and/or the second section 27, 30 of the discharge line 23, in particular into one or more of the inlet line 27, delivery line 30, and first section 28 (such as into the straightly and/or arcuately extending part of the first section 28). Preferably, the UV lamp 40 is arranged to irradiate the UV light at the discharge outlet 24. The UV lamp 40 may be a single UV lamp or may comprise a plurality of UV lamps, wherein each of these UV lamps is arranged to irradiate UV light into a respective one of the lines 27, 30, 28.

The beverage preparation device 1 may further comprise an in-line carbonation device 50. The in-line carbonation device 50 is adapted for entering carbon dioxide (CO2) into the circulating water. For example, the carbon dioxide may enter into the circulating water in the discharge line 23. For example, an orifice 51 may be arranged in the first section 28 of the discharge line 23. As such, the orifice 51 may connect a part, such as a straight part, of the discharge line 23 or first section 28 with another part, such as an arcuate part, of the discharge line 23 or first section 28; in other words, the orifice 51 may be arranged between those parts of the discharge line 23. As such, the carbon dioxide from the in-line carbonation device 50 may enter into this orifice 51. The orifice 51 may extend straight and/or may be designed as a chamber, such as a mixing chamber. The chamber may facilitate that the carbon dioxide effectively enters into the circulating water. A carbon dioxide line 52 may be arranged to connect the in-line carbonation device 50 with the circulating water, for example with the discharge line 23 so that the carbon dioxide can enter into the circulating water. In the carbon dioxide line 52, a valve 53 (e.g. an on/off valve) may be arranged to selectively enter carbon dioxide into the circulating water.

The beverage preparation device 1 further comprises a beverage additive section 60 for dispensing additives via the discharge outlet 24. With respect to a flow direction from the water inlet 21 via the discharge line 23 and to the discharge outlet 24, the beverage additive section 60 may add the additives at a position upstream or downstream of the discharge outlet 24, or at the discharge outlet 24. The beverage additive section 60 may be arranged to dispense only additives and/or to add the additives to water so that the additives provided in the water are subsequently dispensed by the discharge outlet 24 and added to or mixed with the water discharged from the discharge line 23. The beverage additive section 60 may add the additives to (purified) water, which is already sanitized. For example, the beverage preparation device 1 comprises a further (secondary) discharge line 61, which connects the discharge line 23 with the discharge outlet 24. As can be seen in figure 1, the inlet line 27 of the recirculation line 20 may branch into the delivery line 30 and the secondary discharge line 61. As such, the water flowing in the inlet line 27 flows both in the delivery line 30 and the secondary discharge line 61. One or more valves may be provided to accordingly control the water flowing through the (primary) discharge line 23 and secondary discharge line 61. The one or more valves may be, in particular, adapted to control the flow rate in each of the primary discharge line 23 and secondary discharge line 61, and/or to allow and stop the flow along the secondary discharge line 61.

The beverage additive section 60 may dispense the additives via the discharge outlet 24 automatically or on demand, for example in response to a user input (on a user interface such as a button or touch screen). Dispensing of the additives may be carried out by a dedicated dispensing unit, which is adapted to dispense the required amounts of the additive(s) for the final product. As can be seen in figure 1, the beverage additive section 60 may comprise a pump 62 (e.g. an infusion pump), which is adapted to pump water from the water supply 6 or discharge line 23, e.g. from the inlet line 27, into the secondary discharge line 61. The additives are added to this pumped water for being subsequently dispensed via the discharge outlet 24.

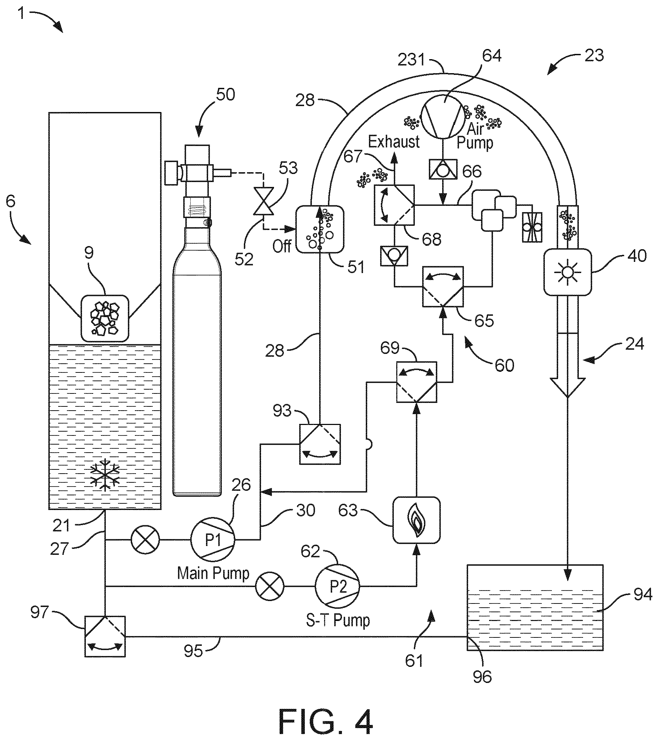

As can be seen in figure 1, the beverage preparation device 1 may comprise a heating unit (boiler) 63 arranged for heating and, thus, sanitizing the water, which is to be discharged via the discharge outlet 24. The heating unit 63 may heat the water so that the water becomes a defined temperature sufficient for sanitization, such as 90°C. The heating unit 63 is preferably arranged at a secondary discharge line such as the secondary discharge line 61, without necessarily requiring the beverage additive section 60. The secondary discharge line 61 may be selectively connectable to the discharge line 23. More specifically, and as shown in figure 4, the secondary discharge line 61 may selectively connect, in a first position of a valve 69, to the discharge line 23, in particular to the delivery line 30. As such, water is pumped, for example by the pump 62, into the secondary discharge line 61, subsequently heated and, thus, sanitized by the heating unit 63 and finally delivered into the discharge line 23, such as into the delivery line 23. The heated water flows via the discharge line 23 towards and then through the discharge outlet 24. Since the water is heated, the flow of water can facilitate the cleaning of the discharge line 23, such as the releasing of impurities (biofilm, germs, etc.) from the discharge line 23. Pumping of the water may be such that the water, which is heated by the heating unit 63, has a flow rate in the range from 0.1 l/min to 0.3 l/min, preferably about 0.2 1/min. Thus, a particularly good sanitization of the water is achieved. In a sanitization cycle, in which the heating unit 63 and preferably the UV lamp 40 are used/activated for sanitizing the water, a defined amount of water is heated, such as 60 ml. The beverage preparation device 1 may be adapted to activate this sanitization cycle in a defined frequency, for example when at most 72h have lapsed after the last usage of the beverage preparation device 1 and/or of the beverage additive section 60 (e.g. after the last capsule is used in the section 60).

In a second position of the valve 69, which is exemplarily shown in figure 1, the secondary discharge line 61 may be disconnected from the discharge line 23 to be used in the beverage additive section 60. As such, the water, previously heated by the heating unit 63, may be delivered into the beverage additive section 60 so that additives, added to the heated water, may further develop in the heated water, for example with respect to the function of the additive and/or the taste of the additive, e.g. by effecting a chemical reaction such as extraction or infusion. The heating unit 63 may be arranged downstream of the pump 62 and upstream of a section, where the additives are added, with respect to the flow direction of the pump 62.

The beverage additive section 60 may be adapted to inject air into the additive and/or the water of the secondary discharge line 62, to which the additive is added. For example, the beverage additive section 61 comprises an air pump 64 for said injection of air. The beverage additive section 60 may thus be operable in a first mode and a second mode, wherein in the first mode air injection is carried out/activated, wherein in the second mode air injection is not carried out/deactivated. For moving the beverage additive section 60 between these two modes, the beverage additive section 60 may comprise a valve 65 such as a (two-) way valve. In a first position of the valve 65, the flow of water flowing from the secondary discharge line 61 is flowing to an air injection line 66, in which air is injected into the water, e.g. by means of the air pump 64. The air injected water is then flowing to a section, where the additives are added to the air injected water. In a second position of the valve 65, the flow of water flowing from the secondary discharge line 61 is flowing directly to the section, where the additives are added to the water, which has consequently no air injected therein. The beverage additive section 60 may comprise an exhaust port 67, which is adapted for exhausting air out of the beverage additive section 60. The exhausted air may be, for example, air that remains in the beverage additive section 60 without having being injected into the water. The exhaust port 67 may be selectively moved between an open (exhaust) position and a closed position, e.g. by way of a (two-) way valve 68.

The additive may be in the form of a liquid or in the form of a liquid, which comprises solid (additive) particles. The additive may be provided in a dedicated container (a cartridge, a capsule, etc.) that may be detachably connected to and/or may be adapted to be removed from the beverage additive section 60. Dependent on the consumer's desire, one and the same device 1 can thus be equipped with different kinds of additives. For example, the beverage preparation device 1 may be adapted to choose among a plurality of additives. The additives may be added to provide infused water. For example, the additives comprise at least one of the group consisting of: flavours, aromas (for example orange, peach, lemon, etc.), minerals, a mineral liquid concentrate, a functional concentrate (such as an additive comprising a vitamin, caffeine or another coffee extract), an edible flavouring concentrate, a tea and/or coffee extract, a fruit juice, a minerals mother solution or combinations thereof. A "functional concentrate" is to be understood as having an effect on the consumer, such as a product that is probiotic, prophylactic, etc. The beverage additive section 60 is preferably adapted to dispense the additives to the water from the primary discharge line 23 and/or the secondary discharge line 61 such that the additives designate an amount up to 5%, preferably 0.05% to 1%, preferably 0.1% to 0.5% by volume, of the resulting liquid material in the final (beverage) product. In general, the final product may be (pure) water, soda, lemonade, a soup, etc.

The beverage preparation device 1 further comprises one or more flushing lines. In the preferred embodiment shown in figure 1, the beverage preparation device 1 comprises only one flushing line 90. The flushing line 90 has a respective flushing outlet 91. Further, the beverage preparation device 1 is configured to operate in a discharging mode and in a flushing mode, i.e. the beverage preparation device 1 can be selectively switched into the discharging mode or the flushing mode. In the discharging mode, the beverage preparation device 1 is arranged for dispensing a beverage, which means that the pump 26 is arranged to circulate water along the discharge line 23 and towards and out of the discharge outlet 24, preferably into the container 25. When the beverage preparation device 1 switches into the flushing mode, the discharging via the discharge outlet 24 stops and the at least one flushing line 90 comes into use. In the flushing mode, at least part of the water in the discharge line 23 (at least 50 ml), such as residual water, then flows by gravity from the discharge line 23 into the flushing line 90 and subsequently out of the flushing outlet 91. This provides a very cheap solution for flushing and, thus, cleaning the discharge line 23, since the pump 26 or any other means, which requires external (electrical) energy, is not necessarily required to operate for the flushing. In the flushing mode, the pump 26 may thus be deactivated. However, in the flushing mode, the pump 26 may be also activated in order to support the flushing, that is, in the flushing mode, the pump 26 may be activated and arranged to draw at least part of the water from the discharge line 23 into the flushing line 90 and subsequently out of the flushing outlet 91. The pump 26 thus draws water along a direction of the discharge line 23, which is opposite to the direction, along which the water circulates along the discharge line 23 to be subsequently discharged via the discharge outlet 24. Thus, a very effective cleaning of the beverage preparation device 1, in particular of the discharge line 23, is achieved.

In order to provide a particularly good flushing by the gravity effect, at least part of the discharge line 23, such as the first section 28 of the discharge line 23 and/or the section 231, is, compared to the flushing line 90, arranged on a higher level with respect to the vertical. The flushing line 90 may extend substantially in the horizontal, or (slightly) oblique to the horizontal (such as at an angle in the range from 0.5-5°), whereas part of the discharge line 23, such as the first section 28, does not extend in the horizontal. For example, part of the first section 28 may extend only in the vertical. Thus, the residual water in the discharge line 23 can effectively flow by gravity into the flushing line 90, since almost all of the potential energy of said residual water in the discharge line 23 can be transformed into kinetic energy for the flow of said residual water in the flushing line 90.

Switching between the discharging mode and the flushing mode is preferably done automatically, for example by means of a (electronic) control unit (not shown). Additionally or alternatively, switching between the discharging mode and the flushing mode may be done manually, such as by means of a dedicated user interface (button, touchscreen, etc.). The flushing can also be electrically activated by detection of the removal of the water tank. Based on certain parameters, an automatic switching into the flushing mode or the discharging mode may thus be carried out. Hence, a sufficient flushing frequency can be easily ensured. For example, based on a status of the beverage preparation device 1, the beverage preparation device 1 may switch between the discharging mode and the flushing mode. The status of the beverage preparation device 1 may be detected or sensed by a dedicated sensor, or the status may be derived from parameters of the beverage preparation device 1. As such, when the status fulfills a defined criterion, such as exceeding or falling below a defined threshold value, the beverage preparation device 1, such as the control unit, may decide to (automatically) switch into the flushing mode or the discharging mode.

For example, the status may be of the water supply 6, such as the presence of the water supply 6. The presence and non-presence of the water supply 6 may be sensed by a dedicated presence sensor. Thus, when a non-presence of the water supply 6 is detected (i.e. when the water supply 6 is removed from the beverage preparation device 1), the beverage preparation device may automatically switch into the flushing mode. Correspondingly, when a presence of the water supply 6 is detected, the beverage preparation device 1 may automatically switch out of the flushing mode, such as into the discharging mode. The detection of the presence may be implemented such that the time of the presence of the water supply 6 is detected, so that based on this time, e.g. when a pre-set time has lapsed, switching into the flushing mode is carried out. The beverage preparation device 1 may also include a reminder function so that based on said time of the presence of the water supply 6, a reminder, such as in the form of a visual and/or acoustic signal, may be generated in order to remind the user of the beverage preparation device 1 that the water supply stays for a (too) long period of time.

Additionally or alternatively, also other statuses of or with respect to the water supply 6 may be used for switching between the discharging mode and the flushing mode, such as the functional connection of the water supply 6 with the discharge line 23, the residence time of water at a specific level in the water supply 6, and/or the temperature of the water within the water supply 6. The functional connection may be detected by a dedicated sensor, for example a sensor detecting whether the water supply 6 properly mates with the device 1, such as with the water inlet 21. The level of the water in the water supply 6 and/or the temperature of the water may be respectively sensed by a dedicated sensor, i.e. a level sensor and a thermometer, respectively. The residence time at the specific level and/or the temperature of the water in the water supply may be an indicator that for a (too) long time no beverage has been dispensed and that, thus, a cleaning of the beverage preparation device 1 by switching into the flushing mode is required. The status of the beverage preparation device 1 may be in general the lapsed time in which no water is discharged via the discharge outlet 24. Thus, when this lapsed (continuous) time exceeds a predefined time, the beverage preparation device 1 may automatically switch into the flushing mode.

The flushing line 90 may be arranged to selectively connect to the discharge line 23 (flushing mode) or disconnect from the discharge line 23 (discharging mode) in order to switch between the discharging mode and the flushing mode. For example, the beverage preparation device 1 may comprise one or more valves so that based on controlling these valves (by the control unit) the beverage preparation device 1 switches between the discharging mode and the flushing mode. In the embodiment shown in figure 1, the beverage preparation device 1 comprises (only) one valve 93 for switching between the discharging mode and the flushing mode. More specifically, the valve 93 is moveable between a first position and a second position, wherein in the first position the beverage preparation device 1 is in the discharging mode (see figure 1), and wherein in the second position the beverage preparation device 1 is in the flushing mode. As shown in figure 1, the valve 93 may, in the first position (discharging mode), connect the first section 28 of the discharge line 23 with the second section 27, 30 of the discharge line 23, in particular with the delivery line 30. In the second position of the valve 93, the valve 93 may connect the first section 28 with the flushing line 90, so that at least part of the water of the discharge line 23 can flow from the first section 28 via the valve 93 into the flushing line 90 to be discharged via the flushing outlet 91. Consequently, the first section 28 is not connected to (i.e. separated from) the second section 27, 30, when the valve 93 is in the second position.

In order to collect the water, which flows out of the flushing outlet 91, the beverage preparation device 1 may comprise a collecting container 94, such as a drip tray. The collecting container 94 is thus arranged to collect the water, which flows via the flushing outlet 91 out of the one or more flushing lines 90. The collecting container 94 may be also arranged to collect water, such as residual water, which flows out of the discharge outlet 94. As such, the collecting container 94 may be arranged opposite to the discharge outlet 24 or may be arranged to face the discharge outlet 24. If the collecting container 94 is designed as a support for the container 25, or if the collecting container 94 is arranged below the support for the container 25, the container 25 is, when used for collecting the beverage dispensed from the discharge outlet 24, preferably arranged between the discharge outlet 24 and the collecting container 94. The collecting container 94 may be removably arranged with respect to the beverage preparation device 1, so that a user can easily remove the container 94 and, thus, dispose of the water collected by the container 94.

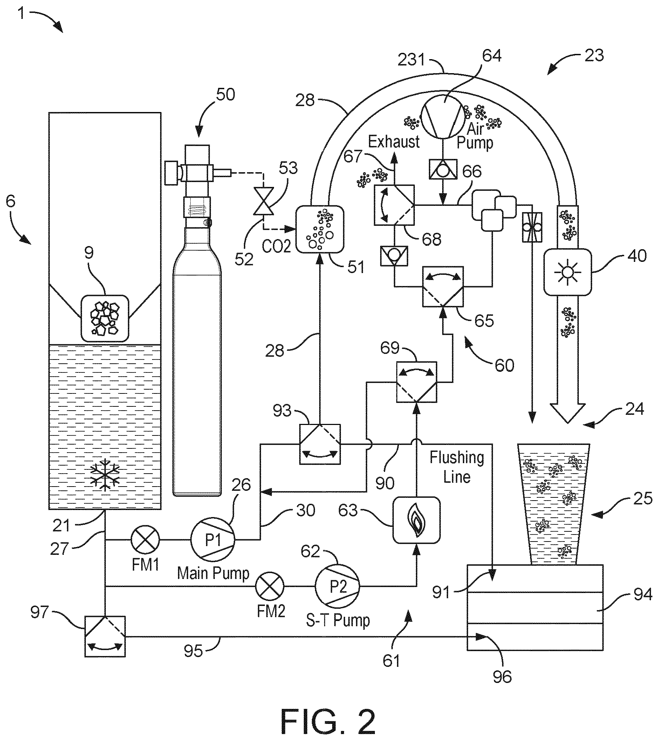

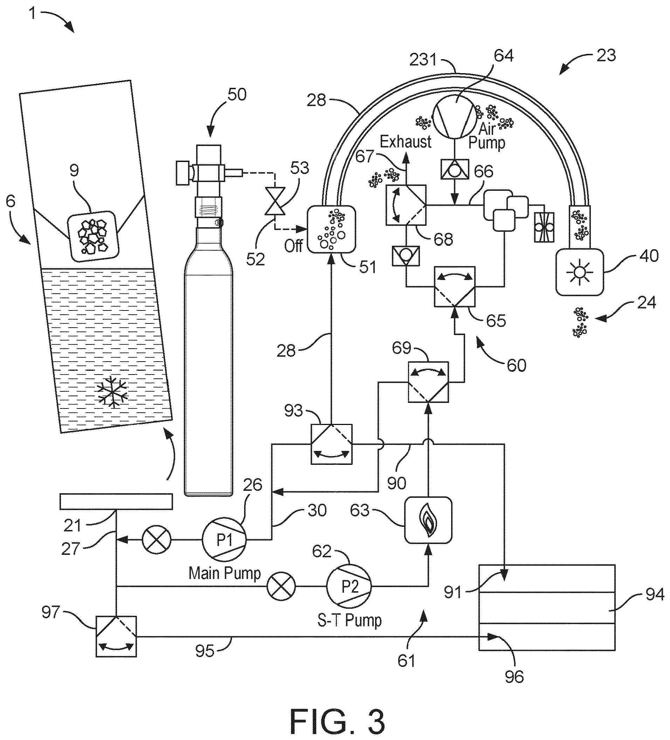

The embodiment shown in figure 2 differs from the embodiment shown in figure 1 in particular in that the beverage preparation device comprises a plurality of flushing lines, namely the (first) flushing line 90 and the further (second) flushing line 95. The description with respect to the first flushing line 90 applies, unless specified differently, to the second flushing line 95. Accordingly, the second flushing line 95 comprises a respective (second) flushing outlet 96. Thus, in the flushing mode, at least part of the water in the discharge line 23 flows by gravity, preferably supported by the pump 26, into the flushing lines 90, 95 and out of their respective flushing outlets 91, 96. In the flushing mode, the second section 27, 30 of the discharge line 23 may be connected to the second flushing line 95. As shown in figure 3, residual water in the first section 28 of the discharge line 23 thus flows into the first flushing line 90, and residual water in the second section 27, 30 of the discharge line 23 flows into the second flushing line 95. In order to provide a particularly good flushing by gravity, the second section 27, 30 of the discharge line 23 may at least in part extend vertically. For example, the second section 27, 30 may comprise two horizontally extending parts and one vertically extending part, wherein the vertically extending part is between the horizontally extending parts, as shown in figure 3.

The flushing lines 90, 95 are not limited to a specific arrangement with respect to one another. Compared to the second flushing line 95, the first flushing line 90 may be arranged at a higher level with respect to the vertical. Thus, the first flushing line 90 may be arranged for removing residual water from the part of the discharge line 23, which extends on a first (higher) level, such as from the the first section 28, and the second flushing line 95 may be arranged for removing residual water from the part of the discharge line 23, which extends on a second (with respect to the first level lower) level, such as the section 27, 30. The flushing lines 90, 95 may at least in part extend horizontally and/or parallel to one another. The collecting container 94 may be arranged to collect the water, which flows via the flushing outlet 96 out of the flushing line 95. The flushing outlet 96 may be arranged such that water flowing out of the flushing outlet 96 flows into the container 94 from a lateral side of the container 94. The flushing outlet 91 may be arranged such that water flowing out of the flushing outlet 91 flows into the container 94 along a direction from above of the container 94, such as along a vertical direction.

For switching the beverage preparation device 1 between the discharging mode and the flushing mode based on controlling valves (by the control unit), the beverage preparation device 1 may comprises the (first) valve 93 and a further (second) valve 97. This valve 97 is designed and arranged analogously to the valve 93. That is, the valve 97 may be moveable between a first position and a second position, wherein in the first position the beverage preparation device 1 is in the discharging mode, and wherein in the second position the beverage preparation device 1 is in the flushing mode. As shown in figure 2, the valve 97 may be, in the first position (discharging mode), not connected the second section 27, 30 of the discharge line 23 to (i.e. disconnected from) the second flushing line 95. In the second position of the valve 97, the valve 97 may connect the second section 27, 30 with the second flushing line 95, so that residual water in the second section 27, 30, i.e. in both the inlet line 27 and the delivery line 30, can flow by gravity via the valve 97 into the second flushing line 95 to be discharged via the flushing outlet 96. A particularly good flushing of the discharge line 23 is thus achieved, namely a flushing of both the first section 28 (by the first flushing line 90) and the second section 27, 30 (by the second flushing line 95).

It should be clear to a skilled person that the embodiment shown in the figures is only a preferred embodiment, but that, however, also other designs of a beverage preparation device 1 can be used. In general, a "line" is to be understood in a broad manner, i.e. any structure adapted for conveying, guiding and/or moving a liquid or fluid. For example, a "line" may be a tube, a pipe, a channel, or a conduit. Further, the water supply 6 is not limited for storing an amount of water only. For example, the water supply 6 may be adapted to store or provide an amount of soda, lemonade, soup, etc.; in other words, the water supply 6 may be adapted to provide or store a liquid material, which comprises, besides the amount of water, other ingredients, resulting in compositions such as soda, lemonade, soup, etc.

## Claims

1. Beverage preparation device (1), comprising:
- a discharge line (23) for discharging water via a discharge outlet (24),
- a pump (26) for selectively circulating water along the discharge line (23) towards the discharge outlet (24), and
- one or more flushing lines (90, 95) with a flushing outlet (91, 96),
- wherein the beverage preparation device (1) is configured to operate in a discharging mode and in a flushing mode, such that
∘ in the discharging mode the pump (26) is arranged to circulate water along the discharge line (23) towards and out of the discharge outlet (24), and
∘ in the flushing mode at least part of the water in the discharge line (23) flows by gravity from the discharge line (23) into the one or more flushing lines (90, 95) and subsequently out of the flushing outlet (91, 96).
the beverage preparation device (1) is **characterized in that** the beverage preparation device (1) is configured to automatically switch between the discharging mode and the flushing mode based on a status of the beverage preparation device (1), such as the status of a water supply (6), e.g. a water tank, from which the pump (26) draws water for the circulation along the discharge line (23), and
wherein in the flushing mode, the pump (26) is arranged to draw at least part of the water from the discharge line (23) into the one or more flushing lines (90, 95) and subsequently out of the flushing outlet (91, 96), and
wherein the pump (26) is a bidirectional pump or a gear pump.

2. The beverage preparation device (1) according to claim 1, wherein, compared to the one or more flushing lines (90, 95), at least part of the discharge line (23) is arranged on a higher level with respect to the vertical.

3. The beverage preparation device (1) according to claim 1 or 2, wherein the status is the presence of the water supply (6), the functional connection of the water supply (6) with the discharge line (23), the residence time of water at a specific level in the water supply (6), the lapsed time in which no water is discharged via the discharge outlet (24), the temperature of the water within the water supply (6), and/or combinations thereof.

4. The beverage preparation device (1) according to any one of the preceding claims, wherein the beverage preparation device (1) comprises one or more valves (93, 97) so that based on controlling the valves (93, 97) the beverage preparation device (1) switches between the discharging mode and the flushing mode.

5. The beverage preparation device (1) according to any one of the preceding claims, wherein the beverage preparation device (1) comprises a first flushing line (90) and a second flushing line (95), wherein in the flushing mode the discharge line (23) is separated into a first section (28), which comprises the discharge outlet (24), and a second section (27, 30), the first section (28) connecting to the first flushing line (90), and the second section (27, 30) connecting to the second flushing line (95), wherein, compared to the second flushing line (95), the first flushing line (90) is preferably arranged at a higher level with respect to the vertical.

6. The beverage preparation device (1) according to any one of the preceding claims, further comprising a UV lamp (40) arranged for irradiating UV light at a position along the discharge line (23) to sanitize the water.

7. The beverage preparation device (1) according to any one of the preceding claims, further comprising a heating unit (63) arranged for heating and, thus, sanitizing the water, which is to be discharged via the discharge outlet (24), wherein the heating unit (63) is preferably arranged at a secondary discharge line (61) which selectively connects to the discharge line (23).

8. The beverage preparation device (1) according to any one of the preceding claims, further comprising a beverage additive section (60) for dispensing additives, such as in the form of a liquid or in the form of a liquid comprising solid particles, via the discharge outlet (24), wherein the beverage additive section (60) is preferably arranged in a secondary discharge line (61) connecting the discharge line (23) with the discharge outlet (24).

9. The beverage preparation device (1) according to any one of the preceding claims, further comprising an in-line carbonation device (50) for entering CO2 into the discharge line (23).

10. The beverage preparation device (1) according to any one of the preceding claims, further comprising a collecting container (94), such as a drip tray, wherein the collecting container (94) is arranged to collect the water, which flows via the flushing outlet (91, 96) out of the one or more flushing lines (90, 95), wherein the collecting container (94) is preferably arranged to collect water, such as residual water, flowing out of the discharge outlet (24).

11. Method for preparing a beverage, comprising:
- circulating water along a discharge line (23) of a beverage preparation device (1) and towards a discharge outlet (24) of the discharge line (23),
- stopping the circulation of water along the discharge line (23),
- connecting one or more flushing lines (90, 95) to the discharge line (23) so that at least part of the water in the discharge line (23) flows by gravity and for through the reverse pumping function from the discharge line (23) into the one or more flushing lines (90, 95) and subsequently out of a flushing outlet (91, 96) of the one or more flushing lines (90, 95).
the method for preparing a beverage is **characterized in that**:
- detecting a status of the beverage preparation device (1), such as the status of a water supply (6) from which water is drawn for the circulation along the discharge line (23), and
- connecting, based on the status of the beverage preparation device (1), the one or more flushing (90, 95) lines to the discharge line (23).

## Patentansprüche

1. Getränkezubereitungsvorrichtung (1), umfassend:
- eine Abgabeleitung (23) zum Abgeben von Wasser über einen Abgabeauslass (24),
- eine Pumpe (26) zum selektiven Zirkulieren von Wasser entlang der Abgabeleitung (23) in Richtung des Abgabeauslasses (24), und
- eine oder mehrere Spülleitungen (90, 95) mit einem Spülauslass (91, 96),
- wobei die Getränkezubereitungsvorrichtung (1) konfiguriert ist, um in einem Abgabemodus und in einem Spülmodus in Betrieb zu sein, derart, dass
o in dem Abgabemodus die Pumpe (26) angeordnet ist, um Wasser entlang der Abgabeleitung (23) zu und aus dem Abgabeauslass (24) zu zirkulieren, und
o in dem Spülmodus mindestens ein Teil des Wassers in der Abgabeleitung (23) durch Schwerkraft von der Abgabeleitung (23) in die eine oder die mehreren Spülleitungen (90, 95) und anschließend aus dem Spülauslass (91, 96) fließt,
wobei die Getränkezubereitungsvorrichtung (1) **dadurch gekennzeichnet ist, dass** die Getränkezubereitungsvorrichtung (1) konfiguriert ist, um zwischen dem Abgabemodus und dem Spülmodus basierend auf einem Status der Getränkezubereitungsvorrichtung (1), wie dem Status einer Wasserversorgung (6), z. B. eines Wassertanks, aus dem die Pumpe (26) Wasser für die Zirkulation entlang der Abgabeleitung (23) entnimmt, automatisch zu wechseln, und
wobei in dem Spülmodus die Pumpe (26) angeordnet ist, um mindestens einen Teil des Wassers aus der Abgabeleitung (23) in die eine oder die mehreren Spülleitungen (90, 95) und anschließend aus dem Spülauslass (91, 96) zu entnehmen, und wobei die Pumpe (26) eine bidirektionale Pumpe oder eine Zahnradpumpe ist.

2. Getränkezubereitungsvorrichtung (1) nach Anspruch 1, wobei im Vergleich zu der einen oder den mehreren Spülleitungen (90, 95) mindestens ein Teil der Abgabeleitung (23) auf einer höheren Ebene bezüglich der Vertikalen angeordnet ist.

3. Getränkezubereitungsvorrichtung (1) nach Anspruch 1 oder 2, wobei der Status die Anwesenheit der Wasserversorgung (6), die funktionale Verbindung der Wasserversorgung (6) mit der Abgabeleitung (23), die Verweilzeit von Wasser auf einer spezifischen Ebene in der Wasserversorgung (6), die verstrichene Zeit, in der kein Wasser über den Abgabeauslass (24) abgegeben wird, die Temperatur des Wassers innerhalb der Wasserversorgung (6) und/oder Kombinationen davon ist.

4. Getränkezubereitungsvorrichtung (1) nach einem der vorstehenden Ansprüche, wobei die Getränkezubereitungsvorrichtung (1) ein oder mehrere Ventile (93, 97) umfasst, so dass basierend auf einem Steuern der Ventile (93, 97) die Getränkezubereitungsvorrichtung (1) zwischen dem Abgabemodus und dem Spülmodus wechselt.

5. Getränkezubereitungsvorrichtung (1) nach einem der vorstehenden Ansprüche, wobei die Getränkezubereitungsvorrichtung (1) eine erste Spülleitung (90) und eine zweite Spülleitung (95) umfasst, wobei in dem Spülmodus die Abgabeleitung (23) in einen ersten Abschnitt (28), der den Abgabeauslass (24) umfasst, und einen zweiten Abschnitt (27, 30) getrennt wird, wobei der erste Abschnitt (28) mit der ersten Spülleitung (90) verbunden ist und der zweite Abschnitt (27, 30) mit der zweiten Spülleitung (95) verbunden ist, wobei im Vergleich zu der zweiten Spülleitung (95) die erste Spülleitung (90) vorzugsweise auf einer höheren Ebene bezüglich der Vertikalen angeordnet ist.

6. Getränkezubereitungsvorrichtung (1) nach einem der vorstehenden Ansprüche, ferner umfassend eine UV-Lampe (40), die zum Bestrahlen mit UV-Licht an einer Position entlang der Abgabeleitung (23) angeordnet ist, um das Wasser zu entkeimen.

7. Getränkezubereitungsvorrichtung (1) nach einem der vorstehenden Ansprüche, ferner umfassend eine Heizeinheit (63), die zum Erhitzen und somit zum Entkeimen des Wassers angeordnet ist, das über den Abgabeauslass (24) abgegeben werden soll, wobei die Heizeinheit (63) vorzugsweise an einer sekundären Abgabeleitung (61) angeordnet ist, die mit der Abgabeleitung (23) wahlweise verbunden ist.

8. Getränkezubereitungsvorrichtung (1) nach einem der vorstehenden Ansprüche, ferner umfassend einen Getränkezusatzstoffabschnitt (60) zum Abgeben von Zusatzstoffen, wie in Form einer Flüssigkeit oder in Form einer Flüssigkeit, umfassend feste Partikel, über den Abgabeauslass (24), wobei der Getränkezusatzstoffabschnitt (60) vorzugsweise in einer sekundären Abgabeleitung (61) angeordnet ist, die die Abgabeleitung (23) mit dem Abgabeauslass (24) verbindet.

9. Getränkezubereitungsvorrichtung (1) nach einem der vorstehenden Ansprüche, ferner umfassend eine Inline-Karbonisierungsvorrichtung (50) zum Einleiten von CO2 in die Abgabeleitung (23).

10. Getränkezubereitungsvorrichtung (1) nach einem der vorstehenden Ansprüche, ferner umfassend einen Sammelbehälter (94), wie eine Tropfschale, wobei der Sammelbehälter (94) angeordnet ist, um das Wasser zu sammeln, das über den Spülauslass (91, 96) aus der einen oder den mehreren Spülleitungen (90, 95) fließt, wobei der Sammelbehälter (94) vorzugsweise angeordnet ist, um Wasser, wie Restwasser, das aus dem Abgabeauslass (24) fließt, zu sammeln.

11. Verfahren zum Zubereiten eines Getränks, umfassend:
- Zirkulieren von Wasser entlang einer Abgabeleitung (23) einer Getränkezubereitungsvorrichtung (1) und zu einem Abgabeauslass (24) der Abgabeleitung (23),
- Stoppen der Wasserzirkulation entlang der Abgabeleitung (23),
- Verbinden einer oder mehrerer Spülleitungen (90, 95) mit der Abgabeleitung (23), so dass mindestens ein Teil des Wassers in der Abgabeleitung (23) durch Schwerkraft und/oder durch die Rückpumpfunktion aus der Abgabeleitung (23) in die eine oder die mehreren Spülleitungen (90, 95) und anschließend aus einem Spülauslass (91, 96) der einen oder mehreren Spülleitungen (90, 95) fließt.
das Verfahren zum Zubereiten eines Getränks
**dadurch gekennzeichnet ist, dass:**
- Erfassen eines Status der Getränkezubereitungsvorrichtung (1), wie des Status einer Wasserversorgung (6), aus der Wasser für die Zirkulation entlang der Abgabeleitung (23) entnommen wird, und
- Verbinden, basierend auf dem Status der Getränkezubereitungsvorrichtung (1), der einen oder der mehreren Spülleitungen (90, 95) mit der Abgabeleitung (23).

## Revendications

1. Dispositif de préparation de boissons (1) comprenant :
- une conduite d'évacuation (23) pour évacuer l'eau par l'intermédiaire d'une sortie d'évacuation (24),
- une pompe (26) pour faire circuler sélectivement l'eau le long de la conduite d'évacuation (23) vers la sortie d'évacuation (24), et
- une ou plusieurs conduites de rinçage (90, 95) avec une sortie de rinçage (91, 96),
- dans lequel le dispositif de préparation de boissons (1) est configuré pour fonctionner dans un mode d'évacuation et dans un mode de rinçage, de sorte que
∘ dans le mode d'évacuation, la pompe (26) est conçue pour faire circuler l'eau le long de la conduite d'évacuation (23) vers la sortie d'évacuation (24) et hors de celle-ci, et
∘ dans le mode de rinçage, au moins une partie de l'eau dans la conduite d'évacuation (23) s'écoule par gravité de la conduite d'évacuation (23) vers la ou les conduites de rinçage (90, 95) et ensuite hors de la sortie de rinçage (91, 96).
le dispositif de préparation de boissons (1) est **caractérisé en ce que** le dispositif de préparation de boissons (1) est configuré pour passer automatiquement du mode d'évacuation au mode de rinçage en fonction d'un état du dispositif de préparation de boissons (1), tel que l'état d'une alimentation en eau (6), par exemple un réservoir d'eau, à partir duquel la pompe (26) prélève l'eau pour la faire circuler le long de la conduite d'évacuation (23), et
dans lequel, dans le mode de rinçage, la pompe (26) est conçue pour prélever au moins une partie de l'eau de la conduite d'évacuation (23) dans le ou les conduites de rinçage (90, 95), et ensuite hors de la sortie de rinçage (91, 96), et dans lequel la pompe (26) est une pompe bidirectionnelle ou une pompe à engrenages.

2. Dispositif de préparation de boissons (1) selon la revendication 1, dans lequel, comparé à la ou les conduites de rinçage (90, 95), au moins une partie de la conduite d'évacuation (23) est conçue à un niveau plus élevé par rapport à la verticale.

3. Dispositif de préparation de boissons (1) selon la revendication 1 ou 2, dans lequel l'état est la présence de l'alimentation en eau (6), le raccordement fonctionnel de l'alimentation en eau (6) avec la conduite d'évacuation (23), le temps de stagna de l'eau à un niveau spécifique dans l'alimentation en eau (6), le temps écoulé pendant lequel aucune eau n'est évacuée par l'intermédiaire de la sortie d'évacuation (24), la température de l'eau dans l'alimentation en eau (6), et/ou des combinaisons de ceux-ci.

4. Dispositif de préparation de boissons (1) selon l'une quelconque des revendications précédentes, dans lequel le dispositif de préparation de boissons (1) comprend une ou plusieurs vannes (93, 97) de sorte que, en fonction de la commande des vannes (93, 97), le dispositif de préparation de boissons (1) commute entre le mode d'évacuation et le mode de rinçage.

5. Dispositif de préparation de boissons (1) selon l'une quelconque des revendications précédentes, dans lequel le dispositif de préparation de boissons (1) comprend une première conduite de rinçage (90) et une seconde conduite de rinçage (95), dans lequel, dans le mode de rinçage, la conduite d'évacuation (23) est séparée en une première section (28), qui comprend la sortie d'évacuation (24), et une seconde section (27, 30), la première section (28) étant raccordée à la première conduite de rinçage (90) et la seconde section (27, 30) étant raccordée à la seconde conduite de rinçage (95), dans lequel, comparé à la seconde conduite de rinçage (95), la première conduite de rinçage (90) est de préférence conçue à un niveau plus élevé par rapport à la verticale.

6. Dispositif de préparation de boissons (1) selon l'une quelconque des revendications précédentes, comprenant en outre une lampe UV (40) conçue pour irradier de la lumière UV à une position le long de la conduite d'évacuation (23) afin d'assainir l'eau.

7. Dispositif de préparation de boissons (1) selon l'une quelconque des revendications précédentes, comprenant en outre une unité de chauffage (63) conçue pour chauffer et donc assainir l'eau qui doit être évacuée par l'intermédiaire de sortie d'évacuation (24), dans lequel l'unité de chauffage (63) est de préférence conçue sur une conduite d'évacuation secondaire (61) qui se raccorde sélectivement à la conduite d'évacuation (23).

8. Dispositif de préparation de boissons (1) selon l'une quelconque des revendications précédentes, comprenant en outre une section d'additifs pour boissons (60) afin de distribuer des additifs, tels que sous forme de liquide ou sous forme de liquide comprenant des particules solides, par l'intermédiaire de la sortie d'évacuation (24), dans lequel la section d'additifs pour boissons (60) est de préférence conçue dans une conduite d'évacuation secondaire (61) raccordant la conduite d'évacuation (23) à la sortie d'évacuation (24).

9. Dispositif de préparation de boissons (1) selon l'une quelconque des revendications précédentes, comprenant en outre un dispositif de carbonatation en ligne (50) pour introduire du CO₂ dans la conduite d'évacuation (23).

10. Dispositif de préparation de boissons (1) selon l'une quelconque des revendications précédentes, comprenant en outre un récipient de collecte (94), tel qu'un bac de récupération, dans lequel le récipient de collecte (94) est conçu pour collecter l'eau qui s'écoule par la sortie de rinçage (91, 96) hors de la ou des conduites de rinçage (90, 95), dans lequel le récipient de collecte (94) est de préférence conçu pour collecter l'eau, telle que l'eau résiduelle, qui s'écoule de la sortie d'évacuation (24).

11. Procédé de préparation d'une boisson comprenant :
- la circulation de l'eau le long d'une conduite d'évacuation (23) d'un dispositif de préparation de boissons (1) et vers une sortie d'évacuation (24) de la conduite d'évacuation (23),
- l'arrêt de la circulation de l'eau le long de la conduite d'évacuation (23),
- le raccordement d'une ou plusieurs conduites de rinçage (90, 95) à la conduite d'évacuation (23) de sorte qu'au moins une partie de l'eau dans la conduite d'évacuation (23) s'écoule par gravité et/ou par la fonction de pompage inverse de la conduite d'évacuation (23) dans la ou les conduites de rinçage (90, 95) et ensuite par une sortie de rinçage (91, 96) de la ou des conduites de rinçage (90, 95),
le procédé de préparation d'une boisson est **caractérisé en ce que :**
- la détection d'un état du dispositif de préparation des boissons (1), tel que l'état d'une alimentation en eau (6) à partir de laquelle l'eau est prélevée pour la circulation le long de la conduite d'évacuation (23), et
- le raccordement, en fonction de l'état du dispositif de préparation de boissons (1), de la ou des conduites de rinçage (90, 95) à la conduite d'évacuation (23).
